# EUROPEAN PATENT SPECIFICATION

(11) **EP 1 925 859 B1**
(45) Date of publication and mention of the grant of the patent: **03.08.2011**
(21) Application number: 07380321.5
(22) Date of filing: 21.11.2007
(51) Int. Cl.: F16J 15/18, F16J 15/24, F16K 41/02

(54) **Packing gland for spray guns**
Stopfbuchspackung für Spritzpistolen
Fouloir pour pistolets à peinture

(30) Priority: 24.11.2006 ES 200602549 U
(43) Date of publication of application: 28.05.2008
(73) Proprietor: Grupo Sagola Sociedad de Promocion de Empresas, S.L., 01010 Vitoria (Alava) (ES)
(72) Inventor: Sanchez Uriondo, Alejandro, 01010 Victoria (Alava) (ES)
(74) Representative: Pons Ariño, Angel

(56) References cited:
- EP-A- 0 447 683
- WO-A-97/30303
- US-A- 2 236 370
- US-A- 4 560 109
- US-A- 5 209 501

## Description

The present invention relates to a packing gland, especially designed for spray guns, and more specifically for the sealing needle of the chamber receiving the product to be sprayed.

The object of the invention is to obtain a packing gland which, in addition to fulfilling its basic function as a sealing element, is self-adjustable in order to automatically eliminate the clearances occurring therein due to wear in the normal operation of the gun.

The invention also affects the mentioned needle on which the packing gland acts.

### Background of the Invention

As is known, a spray gun incorporates two intakes, a compressed air intake and an intake for the product to be sprayed, which intakes access respective chambers with generally coaxial outlets defining a nozzle in which the exit of air generates a Venturi effect on the exit of the product, which effect entrains and sprays such product.

The exit of the product is aided by a needle functioning axially in the mentioned corresponding chamber, with a sealing conical tip which can be axially moved by means of the trigger of the gun.

In order to allow this mobility of the needle, the chamber for the product to be sprayed is subsequently closed by means of a packing gland which, suitably fixed to the body of the gun, radially presses on the needle, forming the necessary seal thereon.

Precisely due to this radial pressure of the packing gland against the needle, said packing gland suffers a progressive wear whereby tightness is lost, for which reason the gun requires periodic maintenance to manually adjust the packing gland, which is undesirable in any way.

Regarding the invention field, it is worth pointing out the patent EP-A-0 447 683 for which it is known a spray gun for spraying paint or the like, with a gun body and a spray nozzle, a nozzle needle being mounted in the gun body for the controllable closure of the spray nozzle via a nozzle needle tip, and the nozzle needle being additionally guided through a seal, and the invention proposes for the purpose of achieving an enhanced degree of service value that the seal be insertable into the gun body essentially perpendicular to the central axis of the nozzle needle.

### Description of the Invention

The packing gland proposed by the invention fully and satisfactorily solves the previously mentioned drawbacks because thanks to its structural features it is "self-adjustable", i.e. it compensates the wear it sustains by its own means, so as to permanently and indefinitely be maintained in optimal functional conditions.

To that end and more specifically, said packing gland is formed by a body provided with means for the tight fixing to the body of the gun, which body configures a sort of cylindrical bowl with a hole at its base for the passage of the needle, a closure gasket being formed within such body, which gasket consists of a flexible sealing element preventing the passage of fluid to the exterior, but with the special particularity that said closure gasket is framed by two scrapers in the form of cup-shaped joints, the inner scraper acting as a protector for the closure gasket, cleaning the paint from the needle when the latter retracts, and the rear scraper, complementing the sealing gasket, permanently receiving the stress caused by a robust spring working under compression and acting on the outer scraper with the placement of a hold-down plate, resting in turn on a rear guide, also traversed by the needle and rigidly joined to the body of the packing gland, by means of riveting, for example.

According to this structure, the permanent pressure of the spring against the hold-down plate, and the latter against the rear scraper, has the effect that as the wear of both scrapers and of the intermediate gasket occurs, as a result of the cup shape of these elements, such elements tend to flatten, compensating for and annulling the clearances on the needle.

Complementarily and so as to enhance the effect of the packing gland, it has been provided that the needle has its surface burnished so as to eliminate therefrom even the slightest roughness.

### Description of the Drawings

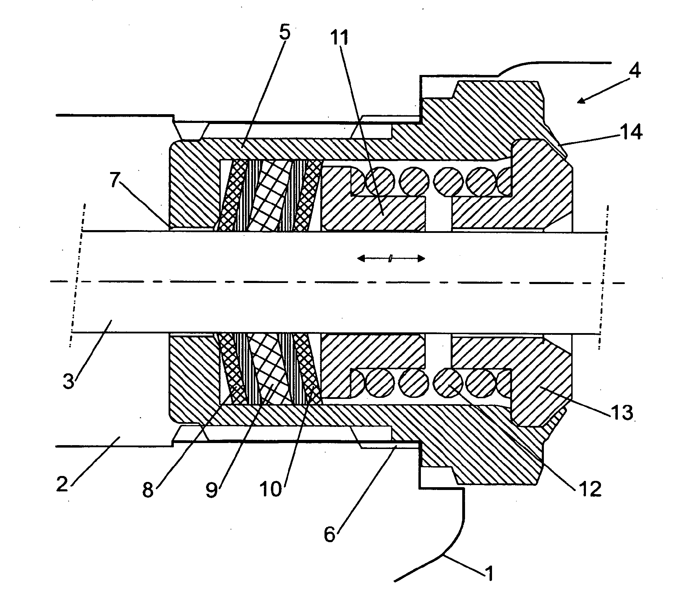

To complement the description being made and for the purpose of aiding to better understand the features of the invention according to a practical embodiment thereof, a single page of drawings is attached as an integral part of said description which shows, with an illustrative and non-limiting manner in the only figure, a side elevational and diametrical section view of a packing gland carried out according to the object of the present invention, which packing gland is duly coupled to the spray gun, which is shown only partially.

### Preferred Embodiment of the Invention

As mentioned in the discussed figure, said figure shows only the part of the pistol receiving the packing gland, specifically the body (1) thereof, the chamber (2) for the product to be sprayed, and the obturating needle (3) operating axially in the mentioned chamber (2) with forward and backward movements generated through the trigger of the gun and determining the opening and closing of the mentioned chamber (2), which is kept permanently closed at its end opposite to the product outlet nozzle, by means of a packing gland (4) allowing the mobility of the needle (3), permanently maintaining tight conditions.

According to the invention, the packing gland (4) is formed from a body (5) which is suitably fixed to the rear end of the chamber (2), for example by means of complementary threads (6) and with the collaboration of tightness elements, said body (5) configuring a kind of cylindrical bowl, as previously stated, provided at its base with a hole (7) for the passage of the needle (3), which bowl is positioned with its opening facing backwards, as can also be seen in the mentioned figure.

Located within the body (5) and traversed by the needle (3) are, first, a rigid scraper (8), preferably made of PTFE, in the shape of a cup, which is similar to a conical washer and which, through its inner edge perfectly adapted to the needle (3), cleans the paint that the latter entrains in its backward movement, preventing the paint from accessing and damaging a closure gasket (9) arranged immediately after the mentioned scraper (8) and which is framed between the latter and a second scraper (10) which, like the mentioned gasket, is also preferably made of PTFE.

This conical configuration for the scrapers (8-10) and for the flexible gasket (9) implies that in the event of deformation thereof due to axial pressure on them and against the bottom of the body (5), their central hole narrowing on the needle (3) such that if said pressure is constant, the self-adjustment of the packing gland occurs automatically.

To that end, and also on the needle (3), within the body (5) of the packing gland, a hold-down plate or pusher (11) having an angular section, as can be observed in the Figure, is arranged such that supported on the perimetral step defined therein there is a spring (12) which, as previously stated, works under compression, tending to frontally shift the pusher (11) and resting on a guide (13) for the needle, which closes the body (5) of the packing gland in the rear or externally and which is suitably fixed to the latter in a non-detachable manner, for example by means of perimetral riveting (14).

The spring (12) thus maintains permanent axial pressure on the packing formed by the scrapers (8 and 10) and the intermediate gasket (9), which in turn deform said packing as the inner wear thereof takes place due to friction on it by the needle (3), the tight conditions of the packing gland being maintained indefinitely.

## Claims

1. A packing gland for spray guns, of the type subsequently closing a chamber (2) of a product to be sprayed, where an obturating needle (3) operates traversing the packing gland (4) in mobility and tightness conditions, comprising a base body (5) provided with means for the tight fixing to the body (1) of the gun, which base body (5) configures a cylindrical bowl provided at the bottom with a hole (7) for the passage of the mentioned needle (3), arranging inside the mentioned body (5) a tight packing **characterized in that** said packing is carried out in two rigid scrapers (8, 10) between which a flexible gasket (9) is arranged, said tight packing being permanently pressed in the axial direction by a spring (12), the components of the mentioned tight packing having a shape selected from a cup and a conical washer shape such that the axial pressure on the components tends to a deformation with narrowing on the needle (3).

2. The packing gland of claim 1, **characterized in that** the spring (12), coaxially assembled on the needle (3), acts on the tight packing through a hold-down plate or pusher (11) sliding on the needle (3) and resting on a guide (13) for the needle (13), preferably fixed to the opening of the body (5) of the packing gland (4) by means of perimetral riveting (14) of said opening.

3. The packing gland of any of claims 1-2, **characterized in that** the hold-down plate (11) acts on the periphery of the scraper (10) farthest from the chamber (2) for the product to be sprayed, wherein the conical configuration of said scraper (10) makes such scraper (10) in turn be farther from the chamber (2).

## Patentansprüche

1. Eine Stopfbüchse für Spritzpistolen von der Art, die anschließend eine Kammer (2) eines zu verspritzenden Produkts schließt, wobei eine abdichtende Nadel (3) so arbeitet, dass diese die Stopfbüchse (4) in dem Zustand der Bewegung und Dichtigkeit durchquert, wobei diese einen Grundkörper (5) umfasst, der mit Mitteln ausgestattet ist, um diesen dicht an dem Gehäuse (1) der Pistole zu befestigen, wobei der Grundkörper (5) ein zylinderförmiges Becken bildet, das im Boden mit einer Bohrung (7) für den Durchlass der besagten Nadel (3) ausgestattet ist, wobei innerhalb des besagten Körpers (5) eine dichte Büchse angeordnet ist, **dadurch gekennzeichnet, dass** die besagte Büchse in zwei steifen Schabern (8, 10) ausgeführt ist, zwischen denen eine flexible Dichtung (9) angeordnet ist, wobei die besagte dichte Büchse von einer Feder (12) permanent in die axiale Richtung gedrückt wird, wobei die Komponenten der besagten dichten Büchse eine Form besitzen, die aus einem Becher und einer kegelförmigen Scheibenform ausgewählt wurde, so dass der axiale Druck auf den Komponenten zu einer Deformation mit einer Verengung auf der Nadel (3) neigt.

2. Die Stopfbüchse des Anspruchs 1, **dadurch gekennzeichnet, dass** die koaxial auf der Nadel (3) montierte Feder (12) mittels einer Niederhalteplatte oder einen Schieber (11) auf die dichte Büchse einwirkt, welche auf der Nadel (3) gleitet und auf einer Führung (13) der Nadel (13) ruht, wobei diese an der Öffnung des Körpers (5) der Stopfbüchse (4) vorzugsweise mittels einer Vernietung (14) am Umfang der besagten Öffnung befestigt ist.

3. Die Stopfbüchse nach einem der Ansprüche 1-2, **dadurch gekennzeichnet, dass** die Niederhalteplatte (11) auf den Umfang des Schabers (10) einwirkt, der am weitesten von der Kammer (2) für das zu verspritzende Produkt entfernt ist, wobei die kegelförmigen Konfigurationen des besagten Schabers (10) veranlasst, dass dieser Schaber (10) seinerseits am weitesten von der Kammer (2) entfernt ist.

## Revendications

1. Un presse-étoupe pour pistolets pulvérisateurs, du type fermant ultérieurement une chambre (2) d'un produit devant être pulvérisé, où une aiguille d'obturation (3) opère en traversant le presse-étoupe (4) dans des conditions de mobilité et d'étanchéité, comprenant un corps de base (5) pourvu de moyens pour la fixation étanche au corps (1) du pistolet, ledit corps de base (5) configure un bol cylindrique pourvu à la base d'un trou (7) pour le passage de l'aiguille (3) mentionnée, disposant à l'intérieur du corps (5) mentionné une garniture d'étanchéité **caractérisé en ce que** ladite garniture est réalisée en deux racleurs rigides (8, 10) entre lesquels un joint flexible (9) est disposé, ladite garniture d'étanchéité étant en permanence comprimée dans le sens axial par un ressort (12), les composants de la garniture d'étanchéité mentionnée ayant une forme choisie parmi une cuvette et un profil de rondelle conique de façon à ce que la pression axiale sur les composants tende vers une déformation avec rétrécissement sur l'aiguille (3).

2. Le presse-étoupe de la revendication 1, **caractérisé en ce que** le ressort (12), coaxialement assemblé à l'aiguille (3), agit sur la garniture d'étanchéité via un serre-flan ou un poussoir (11) glissant sur l'aiguille (3) et reposant sur un guide (13) pour l'aiguille (13), de préférence fixé à l'ouverture du corps (5) du presse-étoupe (4) par un rivetage périphérique (14) de ladite ouverture.

3. Le presse-étoupe de n'importe laquelle des revendications 1-2, **caractérisé en ce que** le serre-flan (11) agit à la périphérie du racleur (10) le plus éloigné de la chambre (2) pour le produit devant être pulvérisé, dans lequel la configuration conique dudit racleur (10) éloigne à son tour ce racleur (10) de la chambre (2).
